Europäisches Patentamt

European Patent Office

Office européen des brevets

(11) Veröffentlichungsnummer : **0 252 223 B1**

(12) # EUROPÄISCHE PATENTSCHRIFT

(45) Veröffentlichungstag der Patentschrift :
**15.01.92 Patentblatt 92/03**

(51) Int. Cl.$^5$ : **B01D 53/34**

(21) Anmeldenummer : **87105378.1**

(22) Anmeldetag : **10.04.87**

(54) **Verfahren zum Reinigen von Rauchgasen.**

(30) Priorität : **03.07.86 DE 3622290**

(43) Veröffentlichungstag der Anmeldung :
**13.01.88 Patentblatt 88/02**

(45) Bekanntmachung des Hinweises auf die
Patenterteilung :
**15.01.92 Patentblatt 92/03**

(84) Benannte Vertragsstaaten :
**AT CH FR GB LI**

(56) Entgegenhaltungen :
**EP-A- 0 156 562**
**DE-A- 2 731 327**
**DE-A- 2 849 607**
**US-A- 3 929 968**

(73) Patentinhaber :
**KERNFORSCHUNGSZENTRUM KARLSRUHE**
**GMBH**
**Weberstrasse 5 Postfach 3640**
**W-7500 Karlsruhe 1 (DE)**

(72) Erfinder : **Dirks, Friedrich**
**In den Buchen 13**
**W-7519 Gondelsheim (DE)**
Erfinder : **Hempelmann, Wilhelm**
**Moselstrasse 4**
**W-7514 Eggenstein-2 (DE)**

EP 0 252 223 B1

Jouve, 18, rue Saint-Denis, 75001 PARIS

## Beschreibung

Die vorliegende Erfindung betrifft ein Verfahren zum Reinigen von Rauchgas aus Verbrennungsanlagen. Hausmüllartige Abfälle, insbesondere aber radioaktive Abfälle aus kerntechnischen Anlagen enthalten PVC und PTFE. Diese Stoffe erzeugen bei der Verbrennung Chloride und Fluoride, die nach der Ta-Luft nur in beschränktem Maße an die Umwelt abgegeben werden dürfen. Das Gleiche gilt für Oxide und $SO_2$. Stand der Technik zur Reinigung der Rauchgase von diesen Emissionen ist der Einbau eines Rauchgaswäschers. Diese Rauchgaswäscher haben den Nachteil, daß sie in großen Mengen stark salzhaltiges Abwasser produzieren. Aus der US-PS 39 29 968 ist es bekannt, die Menge des salzhaltigen Abwassers durch in die Anlage integrierte Verdampfungskühler zu reduzieren. Auch durch entsprechende chemische Behandlung können diese Lösungen in Gips oder andere feste Formen überführt werden. Im Falle von Verbrennungsanlagen für radioaktive Abfälle sind diese Stoffe jedoch radioaktiv und können in der dort anfallenden Form nicht direkt gelagert werden. Aus diesem Grund müssen die in den Wäschern anfallenden Konzentrate mit Hilfe von Zement in eine feste Form überführt werden. Dabei entsteht zusätzlicher Sekundärabfall, der als radioaktiver Abfall gelagert werden muß. Außerdem sind dabei aufwendige Verfahren außerhalb der eigentlichen Verbrennungsanlage erforderlich.

Bei einer im Betrieb befindlichen Verbrennungsanlage wurde nach einer Betriebszeit von etwa 30 Stunden das auf einen Salzgehalt etwa 22 bis 25 % aufgesalzte Waschkonzentrat abgelassen und in einer Zementierungsanlage mit Zement verfestigt. Dabei entstanden pro Charge 8 Fässer mit 200 Liter radioaktiven Abfall. In z.B. im Ausland betriebenen Anlagen werden diese Wässer durch dauernde Zugabe von Frischwasser so weit verdünnt, daß sie an einen Vorfluter abgegeben werden können.

Eine solche Lösung sollte jedoch aus Umweltschutzgründen auf keinem Fall mehr vorgesehen werden.

Bei den bekannten Verfahren wird der Einengungsfaktor einer Verbrennungsanlage durch die geschilderten Effekte insbesondere für radioaktive Abfälle ganz erheblich verringert. U.A. wird durch die erforderliche Entleerung des Wäschers der Einengungsfaktor einer Verbrennungsanlage von etwa 1 : 60 auf etwa 1 : 6 bis 1 : 10 vermindert. Bei anderen, die das Konzentrat verdünnt an einen Vorfluter abgeben, wird Radioaktivität, die bereits in den Wäschern gefangen war, wieder freigesetzt und damit die Umwelt belastet.

Die vorliegende Erfindung hat daher zur Aufgabe, bei einem Verfahren der eingangs beschriebenen Art die Rückstände aus der Rauchgaswäsche zu verringern und z.B. bei der Verbrennung von radioaktiven Stoffen den bei der Wäsche entstehenden und anschließend zur verfestigenden sogenannten "Sekundär-Waste" auf ein Minimum zu reduzieren ohne zusätzliche Energie einzusetzen und ohne weitere radioaktive Flüssigkeiten durch Verdünnung freisetzen zu müssen.

Die konventionellen Emissionen einer Verbrennungsanlage für radioaktive Abfälle oder für konventionellen Hausmüll sollen soweit wie irgendwie möglich vermindert werden. Daneben und vornehmlich im Falle einer Verbrennungsanlage für radioaktive Abfälle soll der bei der Wäsche entstehende genannte "Sekundär-Waste" auf ein Minimum herabgesetzt werden. Die einmal im Wäscher zurückgehaltene Aktivität soll nicht freigesetzt, sondern innerhalb der Anlage in eine endlagerfähige Form überführt werden. Dabei soll keine zusätzliche Energie benötigt werden, sondern es soll die Energie benutzt werden, die bei der Verbrennung beigesetzt wurde.

Zur Lösung dieser Aufgabe schlägt nun die vorliegende Erfindung ein Verfahren zum Reinigen von Rauchgas aus Verbrennungsanlagen, denen Trockenreinigungsstufen nachgeschaltet sein können, mit mindestens einem dieser nachgeschalteten Rauchgaswäscher zur Naßreinigung mit z.B. vollentsalztem Wasser und Rückführung von Flüssigkeit in das zu reinigende Rauchgas und weiteren Filterstufen, vorzugsweise zur Anwendung bei Rauchgasen aus Verbrennungsanlagen für radioaktive Abfälle, deren Waschkonzentratrückstände einer Endlagerung in verfestigter Form zugeführt werden, mit folgenden Verfahrensschritten vor:

a) Durchleiten des heißen Rauchgases hinter der Verbrennungsanlage oder ihren Trockenreinigungsstufen (3, 4) und vor der oder den Naßwaschstufen (9, 10, 11) durch einen Kugelbettreaktor (6) mit Aufheizen der darin befindlichen Reaktionskörper bzw. Kugeln (5),

b) Rückführen von mindestens einem Teil der aufgesalzten Flüssigkeit aus der/den Naßwaschstufen (9, 10, 11) in den Kugelbettreaktor (6),

c) Verdampfen des Wasseranteils der Waschflüssigkeit und Niederschlagen der anfallenden festen Rückstände auf den Oberflächen der Kugeln in der Füllung (5) des Kugelbettreaktors (6),

d) Abrieb des Niederschlages auf den Kugeln (5) in der Füllung des Kugelbettreaktors (6) durch Bewegen mittels eines Rührwerkes (23) oder dergleichen und Ablassen und Sammeln des abgeriebenen Niederschlages durch die Kugelfüllung (5) in einen unter der Kugelfüllung (5) angeordneten Raum (24),

e) Ab- bzw. Rückführen des verdampften Wasseranteiles zusammen mit dem Rauchgas in die Naßwaschstufen (9, 10, 11),

f) Ableiten der gereinigten Rauchgase hinter den Naßwaschstufen (9, 10, 11) über die weiteren, der Verbrennungsanlage nachgeschaltete Filterstufen (13).

2

Zusammengefaßt ergeben sich durch die Erfindung erhebliche Einsparungen bei der Überführung in die endlagerfähige Form, da die Rückstände aus der Rauchgaswäsche nunmehr in fester Form anfallen und der ehemalige Wasseranteil nicht mehr mitverfestigt und der Endlagerung zugeführt werden muß. Die Erfindung ermöglicht es, einen Rauchgaswäscher auf der Saugseite des Gebläses und vor einem eventuell eingebauten Schwebstofffilter vor der Ableitung zu betreiben. Durch die Erfindung est es möglich, die Wassermenge im Wäscher ständig ohen Abschlämmen konstant zu halten. Das zugeführte, vollentsalzte Wasser wird zur Kühlung der Rauchgase benutzt. Gleichzeitig wird der Wäscherkreislauf ständig im Kugelbettrockner von den in ihm enthaltenen Salzen befreit. Gleichzeitig wird bei radioaktivem Rauchgas ein Teil der im Wäscher enthaltenen radioaktiven Stoffe mit den Salzen ausgetragen, so daß sich im Wäscher auch keine Anreicherung an radioaktiven Stoffen bilden kann. Der für diesen Zweck vorgesehene Kugelbettrokner arbeitet mit der im Verbrennungsofen erzeugten Energie selbst, so daß außer zum Betrieb des Rührmotors keinerlei Energie zusätzlich zugeführt werden muß. Der Reinigungsgrad des Wäschers kann durch Erhöhung oder Erniedrigung der aus dem Wäscher entzogenen und dem Kugelbettrockner zugeführten Flüssigkeitsmenge variiert werden. Der Kugelbettrockner arbeitet gleichzeitig als Kühler und hat durch das Kugelbett eine zusätzliche Filterwirkung. Das im Kugelbettrockner entstehende Produkt ähnelt der Asche in den Heißgasfiltern der Anlage und kann mit der Achse aus dem Verbrennungsofen sowie dem Filterkerzenbruch der Filterstufen durch Pelletisieren in eine endlagerfähige Form übergeführt werden.

In besonders vorteilhafter Weise kann mit der Erfindung ein Rauchgaswäsche in Verbindung mit Heißgasfiltern oder anderen Filtern einer Verbrennungsanlage für radioaktive oder konventionelle Abfälle betrieben werden, ohne daß nunmehr noch nennenswerte Menge an Sekundärabfall anfallen. Der anfallen minimale Sekundärabfall ähnelt in Form und Zusammensetzung der im Verbrennungsofen anfallenden Asche. Durch Variieren des in dem Kugelbettrockner getrockneten Teilstroms aus den Naßwaschstufen kann der Reinigungsgrad der Waschstufen über die Temperatur geregelt werden. Gleichzeitig wird ein Teil der Radioaktivität aus dem Wäscher ständig entfernt und in die genannte lagerfähige Form überführt. Durch diese Kombination zwischen Heißgasfilterstufe, Trockner und Wäscher wird eine gleichzeitige Reinigung von radioaktiven und konventionellen Schadstoffen erzielt bei minimalen Anfall von "Sekundär-Waste". Hinter den Wäscher können in vorteilhafter Weise Schwebstofffilter angeordnet werden, die aufgrund der niedrigen Temperaturen hinter den Naßwaschstufen mit einer niedrigeren Tempertur gefahren werden können. Da der Trockner gleichzeitig als eine Art Vorfilter dient, wird bei einem Defekt an der Heißgasfilterstufe lediglich ein kurzzeitiger Anstieg des Trocknerdifferenzdruckes und eine vorübergehende Verschmutzung des Wäschers eintreten. Diese Maßnahmen können durch vermehrte Rückführung von Waschflüssigkeit bzw. durch eine Erhöhung der Umdrehungszahl der Rührwerkes im Kugelbettrocknet rückgängig gemacht werden, so daß ausreichende Zeit für eine Reparatur eines Heißgasfilters zur Verfügung steht. Aufgrund dieser Anordnung kann auf die Hintereinanderschaltung von zwei Rauchgasfiltern verzichtet werden. Der zusätzliche Aufwand des Einbaues eines Kugelbettrockners wird daher durch den Wegfall einer Heißgasfilterstufe wettgemacht.

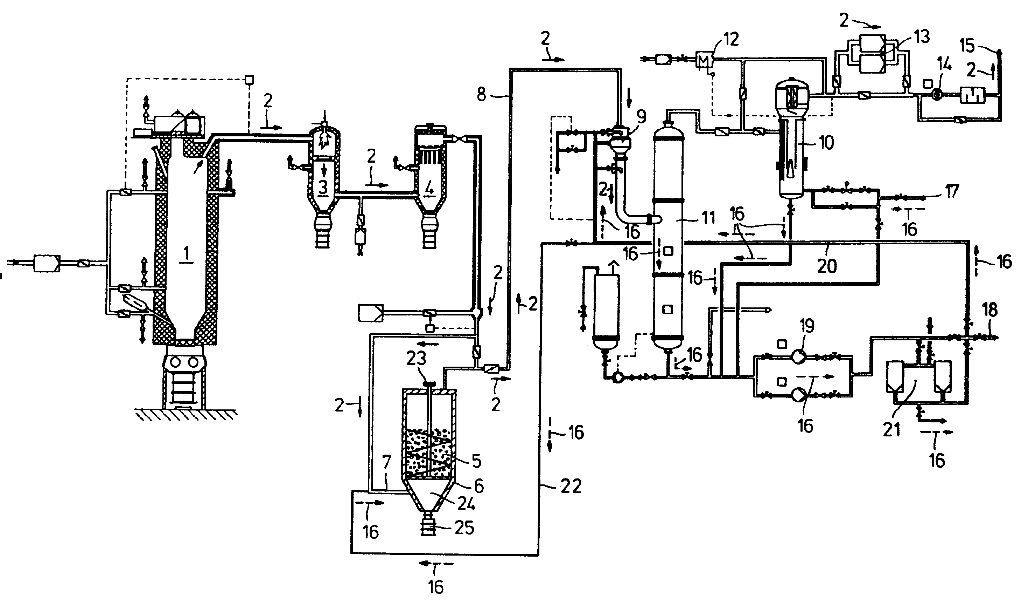

Weitere Einzelheiten des neuen Verfahrens werden im folgenden anhand der Figur, die ein prinzipielles Schaltbild für eine Anlage zeigt, in der das erfindungsgemäße Verfahren angewendet werden soll.

Die im Verbrennungsofen 1 bei der Verbrennung entstehenden Rauchgase werden im Schaltbild gemäß der Figur in Richtung der vollgezeichneten Pfeile 2 geführt (Gaspfad) und werden nach der Nachverbrennung in der Nachbrennkammer 3 und einer Vorfilterung in dem trockenen Heißgasfilter 4 z.B. eines Kerzenfilters mit keramischen Kerzen, durch die Kugelfüllung 5 eines Kugelbettreaktors 6 geleitet. Die Zuleitung 7 für das Rauchgas mündet seitlich unter der Kugelfüllung 5 in den Reaktor 6, so daß das Rauchgas die Kugelfüllung 5 von unten nach oben durchströmt und die Kugeln erhitzt. Eine umgekehrte Strömungsrichtung von oben nach unten ist jedoch auch möglich.

Aus dem Kugelbettreaktor 6 gelangt das Rauchgas über die Leitung 8 zu der mehrstufigen Rauchgaswäsche, die in dem dargestellten Anwendungsfall beispielsweise aus einem Strahlwäscher 9 als Stufe eins, einem Venturiwäsche 10 als Stufe zwei und einer dazwischengeschalteten Waschkolonne 11 steht.

In den Waschstufen für das Rauchgas des Gaspfades 2 durch intensives Waschen mit einer neutralen oder alkalischen Waschflüssigkeit von den Schadstoffen befreit. Hinter den Waschstufen 9, 10 und 11 wird das Rauchgas durch im Erhitzer 12 beheizte und beigemischte Luft aufgeheizt, so daß seine Temperatur vor den Schwebstofffilterstufen 13 über den Taupunkt zu liegen kommt. Das Gas, das mit Hilfe des Gebläses 14 angesaugt wird, kann auch unter Umgehung der Filterstufen 13 aufgeheizt direkt in den Abluftkamin 15 gegeben werden.

Die zum Waschen benützte Waschflüssigkeit, z.B. vollentsalztes Wasser wird in einem Kreislauf in Richtung der gestrichelten Pfeile 16 gefahren (Flüssigkeitspfad). Vom Wassereinlaß 7 gelangt die Waschflüssigkeit zunächst in den Venturiwäscher 10, d.h. sie wird in ihm von unten eingespritzt und strömt damm im Rücklauf von dort mittels der Pumpen 19 in Richtung Auslaß 18. Ein Teil davon oder zugemischtes Frischwasser wird vor dem Auslaß 18 abgezweigt und mittels Leitung 20 den vorderen Waschstufen Strahlwäscher 9 und Waschkolonne 11 wieder zugeführt. Die aus diesen ablaufende Waschflüssigkeit gelangt ebenfalls über die Pumpen 19 zum Auslaß 18. Diesem Auslaß 18 sind Sackfilter 21 vorgeschaltet, um eventuelle grobe Verunreinigungen zu entfernen. Das im Kreislauf verdunstende Wasser wird durch ständige Zugabe von vollentsalztem Wasser in den Kreislauf ersetzt. Dabei wird das zur Verdunstung notwendige Wasser gleichzeitig zum Spülen der Wellenabdichtungen der Pumpe benützt. Die Waschflüssigkeit wird durch Zugabe von Natronlauge oder anderer Chemikalien wie z.B. von Kalkmilch ständig in dem für das Auswaschen der Emissionen günstigen ph-Bereich gehalten.

Um nun ein Aufsalzen der im Kreislauf 16 zirkulierten Waschflüssigkeit zu verhindern, wird ständig ein Teilstrom der Waschflüssigkeit in den Kugelbettreaktor 6 eingesprüht und dort über, unter oder in der Kugelfüllung 5 verdunstet. Die Rückführung erfolgt über die Rückleitung 22, die von der Leitung 20 vor den Naßwaschstufen 9, 11 und 10 in die Zuleitung 7 des Gases in den Kugelbettreaktor 6 kurz vor diesem mündet. Die verdampfte bzw. verdunstete Waschflüssigkeit wird somit durch die Kugelfüllung geführt.

Die in der Waschflüssigkeit enthaltenen Salze schlagen sich auf der erhitzten Kugeln in der Kugelfüllung 5 nieder und werden dort getrocknet. Die Kugeln werden durch ein Rührwerk 23 in ständiger Bewegung gehalten. Durch den Abrieb auf den Kugeln fallen die Salze durch ein Lochblech in ein unter der Kugelfüllung 5 angeordneten Raum 24 und werden dort gesammelt. Von Zeit zu Zeit werden die Salze durch Öffnen einer Klappe in ein unter dem Kugelbettreaktor 6 angeordnetes Faß 25 abgelassen. Diese Salze werden später der Asche des Verbrennungsofens 1 beigemischt und mit dieser Asche einer weiteren Einengung durch Verpressen in einer nicht dargestellten Hochdruckpresse zugeführt. Das entstehende Produkt entspricht dabei den gegenwärtigen Endlagerbedingungen.

Die Flüssigkeit wird jeweils auf der Rauchgaseintrittsseite dem Kugelbettreaktor 6 zugegeben. Die Eintrittstemperatur des Rauchgases in diesen kann dabei zwischen 350° C und 500° C schwanken. Die Austrittstemperatur liegt im Bereich von 100° C und höher. Die Austrittstemperatur kann durch Regelung der zugegeben Flüssigkeitsmenge an Waschflüssigkeit variiert werden. Im Regelfall wird das Rührwerk 23 mit einer minimalen Geschwindigkeit von 1 bis 3 Umdrehungen pro Minute betrieben. Nur bei Verstopfungen wird die Umdrehungszahl kurzzeitig erhöht um durch einen erhöhten Abrieb auf den Kugeln den Differenzdruck des Kugelbettreaktors 6 wieder zu vermindern. Der Kugelbettreaktor 6 wird der Heißgasfilterstufe 4 und den Naßwaschstufen 9, 10 und 11 betrieben. Er kann sowohl im Hauptstrom als auch im Nebenstrom gefahren werden, die Umschaltung erfolgt dann durch entsprechend geschaltete Ventile in den Rohrleitungen.

## Patentansprüche

1. Verfahren zum Reinigen von Rauchgas aus Verbrennungsanlagen, denen Trockenreinigungsstufen nachgeschaltet sein können, mit mindestens einem dieser nachgeschalteten Rauchgaswäscher zur Naßreinigung mit z.B. vollentsalztem Wasser und Rückführung von Flüssigkeit in das zu reinigende Rauchgas und weiteren Filterstufen, vorzugsweise zur Anwendung bei Rauchgasen aus Verbrennungsanlagen für radioaktive Abfälle, deren Waschkonzentratrückstände einer Endlagerung in verfestigter Form zugeführt werden, mit folgenden Verfahrensschritten:

a) Durchleiten des heißen Rauchgases hinter der Verbrennungsanlage oder ihren Trockenreinigungsstufen (3, 4) und vor der oder den Naßwaschstufen (9, 10, 11) durch einen Kugelbettreaktor (6) mit Aufheizen der darin befindlichen Reaktionskörper bzw. Kugeln (5),

b) Rückführen von mindestens einem Teil der aufgesalzten Flüssigkeit aus der/den Naßwaschstufen (9, 10, 11) in den Kugelbettreaktor (6),

c) Verdampfen des Wasseranteils der Waschflüssigkeit und Niederschlagen der anfallenden festen Rückstände auf den Oberflächen der Kugeln in der Füllung (5) des Kugelbettreaktors (6),

d) Abrieb des Niederschlages auf den Kugeln (5) in der Füllung des Kugelbettreaktors (6) durch Bewegen mittels eines Rührwerkes (23) oder dergleichen und Ablassen und Sammeln des abgeriebenen Niederschlages durch die Kugelfüllung (5) in einen unter der Kugelfüllung (5) angeordneten Raum (24),

e) Ab- bzw. Rückführen des verdampften Wasseranteiles zusammen mit dem Rauchgas in die Naßwaschstufen (9, 10, 11),

f) Ableiten der gereinigten Rauchgase hinter den Naßwaschstufen (9, 10, 11) über die weiteren, der Verbrennungsanlage nachgeschaltete Filterstufen (13).

2. Verfahren nach Anspruch 1, mit den weiteren Schritten innerhalb des Schrittes d)

$d_1$) Einfüllen des abgeriebenen Niederschlages aus dem Raum (24) in ein Transportfaß (25),

$d_2$) Beimischen des Niederschlages zu der Asche des Verbrennungsofens (1).

3. Verfahren nach Anspruch 1 oder 2, mit weiteren Verfahrensschritten:

g) Einstellen der Austrittstemperatur des Verbrennungsgases hinter dem Kugelbettreaktor (6) durch Variieren der rückgeführten Waschflüssigkeitsmenge,

h) Anheben des Feuchte-Gehaltes in dem Rauchgas hinter den Naßwaschstufen (9, 10, 11) über den Taupunkt.

## Claims

1. Process for purifying flue gas emerging from combustion plants, the dry purification stages of which may be subsequently added, utilising at least one flue gas washer, which is subsequently added thereto, for wet purification with, for example, fully desalinated water and for returning fluid into the flue gas to be purified, and utilising additional filter stages, preferably for use with flue gases emerging from combustion plants for radioactive waste materials, the residues of the washing concentrates thereof being delivered for final storage in solidified form, comprising the following process steps:

a) conducting the hot flue gas after the combustion plant or its dry purification stages (3, 4) and before the wet washing stage or stages (9, 10, 11) through a ball bed reactor (6), whereby the reaction bodies or balls (5) situated therein are heated-up;

b) returning at least a portion of the salt-containing fluid from the wet washing stage or stages (9, 10, 11) into the ball bed reactor (6);

c) evaporating the water content of the washing fluid and precipitating the accumulating solid residues onto the surfaces of the balls in the filling (5) of the ball bed reactor (6);

d) wearing-down the precipitate on the balls (5) in the filling of the ball bed reactor (6) as a result of displacement by means of an agitator (23) or the like, and discharging and collecting the worn-down precipitate through the ball filling (5) into a chamber (24) disposed beneath the ball filling (5);

e) conducting away and/or returning the evaporated water content, together with the flue gas, into the wet washing stages (9, 10, 11);

f) conducting the purified flue gases after the wet washing stages (9, 10, 11) over the additional filter stages (13), which are subsequently added to the combustion plant.

2. Process according to claim 1, comprising the additional steps within step d):

$d_1$) emptying the worn-down precipitate from the chamber (24) into a conveyor drum (25);

$d_2$) admixing the precipitate to the ash of the combustion furnace (1).

3. Process according to claim 1 or 2, comprising the additional process steps:

g) adjusting the output temperature of the combustion gas leaving the ball bed reactor (6) by varying the returned quantity of washing fluid;

h) raising the moisture content in the flue gas leaving the wet washing stages (9, 10, 11) above the condensation point.

## Revendications

1. Procédé pour la purification de fumées d'installations d'incinération, dans lesquelles peuvent être insérés des étages de nettoyage à sec, avec au moins un des laveurs de fumée insérés affecté à l'épuration par voie humide avec par exemple de l'eau totalement désalinisée et retour du liquide dans la fumée à purifier et les autres étages de filtrage, pour utilisation de préférence sur les fumées des installations d'incinération pour déchets radioactifs, dont les résidus de concentrés de lavage doivent être amenés sous forme compactée, avec les stades suivants du procédé :

a) passage de la fumée chaude en aval de l'installation d'incinération ou de ses étages de nettoyage à sec (3, 4) et avant l'étage ou les étages d'épuration après voie humide (9, 10, 11) à travers un réacteur à lit à billes (6) avec réchauffage du corps de réaction et des billes (5) qu'il contient,

b) retour d'au moins une partie du liquide salinisé issu du/des étages d'épuration par voie humide (9, 10, 11) dans le réacteur à lit à billes (6),

c) vaporisation de la partie aqueuse du liquide de lavage et précipitation des résidus solides qui apparaissent sur la surface des billes dans le remplissage (5) du réacteur à lit à billes (6),

d) élimination du précipité par frottement sur les billes (5) dans le remplissage du réacteur à lit à billes (6) par mouvement au moyen d'un agitateur (23) ou engin analogue et évacuation et recueil du précipité éliminé par frottement à travers le remplissage à billes dans un volume (24) placé sous le remplissage à billes (5),

e) évacuation ou retour de la partie aqueuse vaporisée simultanément avec la fumée dans les étages dépuration par voie humide (9, 10, 11),

f) évacuation de la fumée purifiée en aval des étages d'épuration par voie humide (9, 10, 11) sur les autres étages de filtres (13) insérés dans l'installation d'incinération.

2. Procédé selon la revendication 1, avec les stades complémentaires à l'intérieur du stade (d).

$d_1$) transfert du précipité éliminé par frottement, de volume (24) dans un fût de transport (25),

$d_2$) mélange du précipité à la cendre du four d'incinération (1).

3. Procédé selon la revendication 1 ou 2, avec des stades complémentaires du procédé :

g) réglage de la température de sortie du gaz d'incinération en aval du réacteur à lit à billes (6) par variation de la quantité de liquide de lavage recyclée.

h) élévation au-dessus du point de rosée de la teneur en humidité de la fumée en aval des étages d'épuration par voies humide (9, 10, et 11).

EP 0 252 223 B1